# EUROPEAN PATENT APPLICATION

(11) **EP 4 832 632 A1**
(43) Date of publication of application: **28.10.2026**
(21) Application number: 24906292.8
(22) Date of filing: 16.12.2024
(51) Int. Cl.: H04W 72/23

(54) **RESOURCE SCHEDULING METHOD AND APPARATUS, AND COMMUNICATION DEVICE AND STORAGE MEDIUM**

(30) Priority: 22.12.2023 CN 202311785701
(71) Applicant: CHINA MOBILE COMMUNICATION CO., LTD RESEARCH INSTITUTE, Beijing 100053 (CN); CHINA MOBILE COMMUNICATIONS GROUP CO., LTD., Beijing 100032 (CN)
(72) Inventor: HAN, Lincong, Beijing 100032 (CN); LOU, Mengting, Beijing 100032 (CN); WANG, Yajuan, Beijing 100032 (CN); JIN, Jing, Beijing 100032 (CN); WANG, Qixing, Beijing 100032 (CN); LIU, Guangyi, Beijing 100032 (CN)
(74) Representative: Herrero & Asociados, S.L.
(86) International application number: PCT/CN2024/139566
(87) International publication number: WO 2025/130811

(57) **Abstract**

Provided in the present disclosure are a resource scheduling method and apparatus, and a communication device and a storage medium. The method includes: a first communication device sending first information to a second communication device, where the first information is used for indicating whether to avoid a first resource, or indicate whether to use a sensing signal carried on the first resource, the first resource indicating the resource occupied by a sensing signal configured by the first communication device.

## Description

### CROSS-REFERENCE TO RELATED APPLICATIONS

The present application claims the priority of the Chinese Patent Application No. 202311785701.6 filed in China on December 22, 2023, the entire content of which is hereby incorporated by reference.

### TECHNICAL FIELD

The present disclosure relates to the field of communication technologies, and in particular, to a resource scheduling method, an apparatus, a communication device, and a storage medium.

### BACKGROUND

In a New Radio (NR) system, a Physical Downlink Shared Channel (PDSCH) is a physical layer channel for carrying downlink service data. In the related art, sensing signals may share PDSCH resources with data signals and other reference signals, etc., which may lead to inaccurate rate matching and consequently result in failure to demodulate data signals normally.

### SUMMARY OF THE DISCLOSURE

To address the problems in the related art, embodiments of the present disclosure provide a resource scheduling method, an apparatus, a communication device, and a storage medium.

The technical solutions of the embodiments of the present disclosure are implemented as follows:
Embodiments of the present disclosure provide a resource scheduling method, applied to a first communication device, the method including:
sending first information to a second communication device;
wherein the first information is configured to indicate whether to avoid first resources, or to indicate whether to use a sensing signal carried on the first resources; the first resources represent resources occupied by a sensing signal configured by the first communication device.

In some embodiments, the first information includes at least one of the following:
a first identifier, configured to indicate whether to avoid the first resources or to indicate whether to use the sensing signal carried on the first resources;
a first number, representing a number of resource elements (REs) occupied by the first resources; or
a second identifier, representing an identifier or index of a sensing signal pattern configured by the first communication device.

In some embodiments, the method further includes:
sending second information to the second communication device;
wherein the second information is configured to indicate a position of the first resources, and the first resources are at an RE granularity.

In some embodiments, the second information includes at least one of the following:
a third identifier, configured to indicate a sensing mode as monostatic sensing or cooperative sensing;
N pieces of third information; or
N second identifiers;
wherein each second identifier corresponds to a corresponding piece of third information; the third information represents position information of the first resources; the second identifier represents an identifier or index of a sensing signal pattern configured by the first communication device; N is a positive integer.

In some embodiments, the third information includes start position information, a time-domain density and a frequency-domain density of the sensing signal, and a second number;
wherein the start position information is configured to indicate a position of a first resource element (RE) occupied by the sensing signal;
the second number represents a number of symbols occupied by the sensing signal.

In some embodiments, in a case where the first communication device and the second communication device perform cooperative sensing, the first information is configured to indicate using the sensing signal carried on the first resources; or
in a case where the first communication device and/or the second communication device is in a monostatic sensing mode, or the second communication device does not have sensing capability or has no sensing requirement, the first information is configured to indicate avoiding or not using the first resources, or to indicate not using the sensing signal carried on the first resources.

Embodiments of the present disclosure further provide a resource scheduling method, applied to a second communication device, the method including:
receiving first information sent by a first communication device;
wherein the first information is configured to indicate whether to avoid first resources, or to indicate whether to use a sensing signal carried on the first resources, and the first resources represent resources occupied by a sensing signal configured by the first communication device.

In some embodiments, the first information includes at least one of the following:
a first identifier, configured to indicate whether to avoid the first resources or to indicate whether to use the sensing signal carried on the first resources;
a first number, representing a number of resource elements (REs) occupied by the first resources; or
a second identifier, representing an identifier or index of a sensing signal pattern configured by the first communication device.

In some embodiments, the method further includes:
receiving second information sent by the first communication device;
wherein the second information is configured to indicate a position of the first resources, and the first resources are at an RE granularity.

In some embodiments, the second information includes at least one of the following:
a third identifier, configured to indicate a sensing mode as monostatic sensing or cooperative sensing;
N pieces of third information; or
N second identifiers;
wherein each second identifier corresponds to a corresponding piece of third information; the third information represents position information of the first resources; the second identifier represents an identifier or index of a sensing signal pattern configured by the first communication device; N is a positive integer.

In some embodiments, the third information includes start position information, a time-domain density and a frequency-domain density of the sensing signal, and a second number;
wherein the start position information is configured to indicate a position of a first resource element (RE) occupied by the sensing signal;
the second number represents a number of symbols occupied by the sensing signal.

In some embodiments, in a case where the first communication device and the second communication device perform cooperative sensing, the first information is configured to indicate using the sensing signal carried on the first resources; or
in a case where the first communication device and/or the second communication device is in a monostatic sensing mode, or the second communication device does not have sensing capability or has no sensing requirement, the first information is configured to indicate avoiding or not using the first resources, or to indicate not using the sensing signal carried on the first resources.

In some embodiments, the method further includes:
determining a third number according to the first information; wherein the third number represents a number of resource elements (REs) for transmitting data signals.

Embodiments of the present disclosure further provide a resource scheduling apparatus, including:
a first sending unit, configured to send first information to a second communication device;
wherein the first information is configured to indicate whether to avoid first resources, or to indicate whether to use a sensing signal carried on the first resources; the first resources represent resources occupied by a sensing signal configured by the first communication device.

Embodiments of the present disclosure further provide a resource scheduling apparatus, including:
a first receiving unit, configured to receive first information sent by a first communication device;
wherein the first information is configured to indicate whether to avoid first resources, or to indicate whether to use a sensing signal carried on the first resources; the first resources represent resources occupied by a sensing signal configured by the first communication device.

Embodiments of the present disclosure further provide a first communication device, including: a first processor and a first communication interface;
wherein the first communication interface is configured to send first information to a second communication device;
wherein the first information is configured to indicate whether to avoid first resources, or to indicate whether to use a sensing signal carried on the first resources; the first resources represent resources occupied by a sensing signal configured by the first communication device.

Embodiments of the present disclosure further provide a second communication device, including: a second processor and a second communication interface;
wherein the second communication interface is configured to receive first information sent by a first communication device;
wherein the first information is configured to indicate whether to avoid first resources, or to indicate whether to use a sensing signal carried on the first resources; the first resources represent resources occupied by a sensing signal configured by the first communication device.

Embodiments of the present disclosure further provide a communication device, including a processor and a memory for storing a computer program capable of running on the processor,
where the processor is configured to, when running the computer program, execute the operations of any method on the first communication device side, or execute the operations of any method on the second communication device side.

Embodiments of the present disclosure further provide a storage medium, having a computer program stored thereon, the computer program, when executed by a processor, implementing the operations of any method on the first communication device side, or implementing the operations of any method on the second communication device side.

In the resource scheduling method, apparatus, communication device, and storage medium provided by the embodiments of the present disclosure, the first communication device sends first information to the second communication device, and the second communication device receives the first information sent by the first communication device; where the first information is configured to indicate whether to avoid first resources or to indicate whether to use a sensing signal carried on the first resources, the first resources representing resources occupied by a sensing signal configured by the first communication device. It can be seen that in the embodiments of the present disclosure, the first communication device can inform the second communication device, through the first information, whether it is necessary to avoid the first resources or whether to use the sensing signal carried on the first resources, so as to avoid the problem of inaccurate rate matching caused by the second communication device not excluding the sensing signal or the resources occupied by the sensing signal in a case where the first communication device configures resources occupied by the sensing signal, thereby improving the accuracy and processing efficiency of demodulating data signals.

### BRIEF DESCRIPTION OF THE DRAWINGS

FIG. 1 is a schematic diagram of a sensing system applicable to an embodiment of the present disclosure according to the related art.
FIG. 2 is a schematic flowchart of a resource scheduling method according to some embodiments of the present disclosure.
FIG. 3 is a schematic flowchart of a resource scheduling method according to some embodiments of the present disclosure.
FIG. 4 is a schematic diagram of PDSCH resource configuration in an application embodiment of the present disclosure.
FIG. 5 is a schematic diagram of PDSCH resource configuration in an application embodiment of the present disclosure.
FIG. 6 is a schematic structural diagram of a resource scheduling apparatus according to some embodiments of the present disclosure.
FIG. 7 is a schematic structural diagram of a resource scheduling apparatus according to some embodiments of the present disclosure.
FIG. 8 is a schematic structural diagram of a first communication device according to some embodiments of the present disclosure.
FIG. 9 is a schematic structural diagram of a second communication device according to an embodiment of the present disclosure.

### DETAILED DESCRIPTION

There may be two types of time-domain resource allocation methods for PDSCH: Mapping Type A and Mapping Type B. The time-domain resources in these two mapping types are determined jointly by a starting symbol position S value and a symbol length L value. Mapping Type A can allocate more time-domain symbols (3~14), but the starting symbol position can only be the first 4 symbols of each time slot. Mapping Type A is mainly applied in Enhanced Mobile Broadband (eMBB) scenarios. In Mapping Type B, the starting symbol can appear at any position among the first 13 symbols of each time slot, but the minimum symbol length can be 2. Therefore, Mapping Type B is also called Mini-Slot, and is mainly applied in Ultra-Reliable Low-Latency Communication (URLLC) scenarios.

There may be two types of frequency-domain resource allocation methods for PDSCH: Resource Allocation Type 0 and Resource Allocation Type 1. Resource Allocation Type 0 uses a Bitmap to specify the positions of frequency-domain Resource Blocks (RBs), where each bit represents one Resource Block Group (RBG). Resource Allocation Type 1 uses the same method as the Bandwidth Part (BWP) frequency-domain resource allocation, giving a starting RB position value and a number of consecutive RBs.

Through the above time-domain resource configuration and frequency-domain resource configuration, the time-frequency resource positions occupied by the PDSCH at the RB granularity can be obtained. During PDSCH resource mapping, special attention must be paid to avoiding Resource Elements (REs) at predetermined special positions: Demodulation Reference Signal (DMRS), Channel State Information-Reference Signal (CSI-RS), Phase-tracking Reference Signal (PT-RS), Timing Reference Signal (TRS), Synchronization Signal (SS)/Physical Broadcast Channel (PBCH), Control Resource Set (CORESET), Physical Downlink Control Channel (PDCCH), etc.

Integrated Sensing and Communication (ISAC) technology enables communication systems to have sensing capabilities, thereby achieving perception of non-network targets. For example, sensing algorithms may be adopted to obtain position information (including distance, angle, etc.) between a target and a base station. To integrate communication and sensing functions into mobile communication systems, a base station is required to send sensing signals for sensing while sending data signals. The sensing signals may share PDSCH resources with data signals and other reference signals.

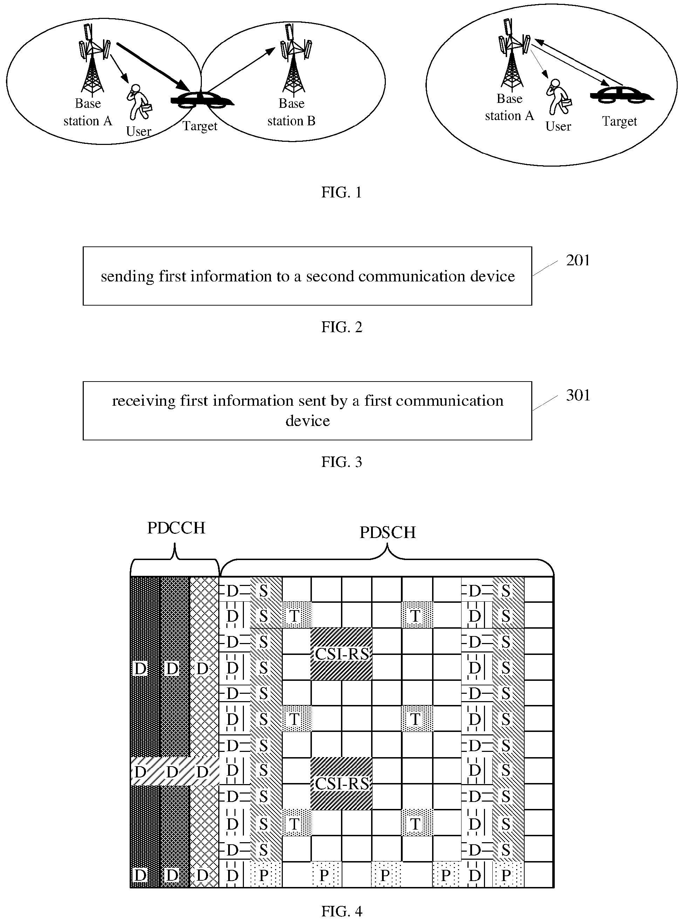

As shown in FIG. 1, whether in cooperative sensing or monostatic sensing, the PDSCH of a transmitting base station (base station A) is required to carry both a data signal sent to user equipment (UE) and a sensing signal configured for target detection (i.e., detecting a target). For a UE, when the UE also has sensing requirements, it may use this sensing signal for sensing; when the UE only has communication requirements, the sensing signal is a useless signal and shall be excluded before data demodulation to improve the accuracy and processing efficiency of rate matching and data demodulation. Therefore, the base station is required to notify the UE of the time-frequency positions of the sensing signals at the RE granularity, and inform the UE whether it is necessary to avoid or exclude the sensing signals during data processing. In the related art, existing schemes lack notification to the UE to avoid the REs occupied by the sensing signals during the PDSCH scheduling process, which may lead to inaccurate rate matching and consequently failure to demodulate data signals normally.

Based on this, in various embodiments of the present disclosure, a first communication device sends first information to a second communication device, and the second communication device receives the first information sent by the first communication device; where the first information is configured to indicate whether to avoid first resources or to indicate whether to use a sensing signal carried on the first resources; the first resources represent resources occupied by a sensing signal configured by the first communication device. It can be seen that in the embodiments of the present disclosure, the first communication device can inform the second communication device, through the first information, whether it is necessary to avoid the first resources or whether to use the sensing signal carried on the first resources, so as to avoid the problem of inaccurate rate matching caused by the second communication device not excluding the sensing signal or the resources occupied by the sensing signal in a case where the first communication device configures resources occupied by the sensing signal, thereby improving the accuracy and processing efficiency of demodulating data signals.

The present disclosure will be further described in detail below with reference to the accompanying drawings and embodiments.

Some embodiments of the present disclosure provide a resource scheduling method, applied to a first communication device. The first communication device may be understood as a network device or a base station, which can configure resources occupied by the sensing signals on the PDSCH, for example, REs. As shown in FIG. 2, the method includes operations at blocks illustrated herein.

At block 201: Sending first information to a second communication device.

The first information is configured to indicate whether to avoid first resources or to indicate whether to use a sensing signal carried on the first resources; where the first resources represent resources occupied by a sensing signal configured by the first communication device.

In a case where the first communication device has configured resources (first resources) occupied by the sensing signals, the first communication device may be configured to send the first information to the second communication device. The second communication device may be a terminal or a base station, and the base station may be understood as a network device. The first information may be carried in signaling, messages, or control information supported by both the first communication device and the second communication device. For example, when the second communication device is a terminal, the first information may be carried in Downlink Control Information (DCI), or a Media Access Control (MAC) Control Element (CE). When the second communication device is a base station, the first information may be sent through Xn interface signaling.

The first resources may be REs on the PDSCH occupied by the sensing signals. The avoiding the first resources may be understood as avoiding the first resources during rate matching and/or data demodulation. The using the sensing signal carried on the first resources may be understood as using the sensing signal carried on the first resources when performing sensing measurement and estimation.

In some embodiments, in a case where the first communication device and the second communication device perform cooperative sensing, the first information is configured to indicate using the sensing signal carried on the first resources; or
in a case where the first communication device and/or the second communication device is in a monostatic sensing mode, or the second communication device does not have sensing capability or has no sensing requirement, the first information is configured to indicate avoiding or not using the first resources, or to indicate not using the sensing signal carried on the first resources.

In a case where the first communication device and the second communication device perform cooperative sensing, the second communication device is required to perform sensing measurement and estimation based on the sensing signal sent by the first communication device. Therefore, the first information is configured to indicate using the sensing signal carried on the first resources, or to indicate using the sensing signal carried on the first resources when performing sensing measurement and estimation, so as to receive and process the sensing signal carried on the first resources, thereby utilizing the sensing signal to perform sensing measurement and estimation. The first communication device and the second communication device performing cooperative sensing may be described as the first communication device and the second communication device being in a cooperative sensing mode.

In a case where the first communication device and/or the second communication device is in a monostatic sensing mode, or the second communication device does not have sensing capability or has no sensing requirement, the second communication device does not need the first resources or does not need to use the sensing signal carried on the first resources to perform sensing measurement and estimation, or only has communication requirements. For the second communication device, the sensing signal carried on the first resources is a useless signal. Therefore, the first information is configured to indicate avoiding or not using the first resources, or to indicate not using the sensing signal carried on the first resources, such that the second communication device can exclude the first resources or the sensing signal before performing data demodulation and/or rate matching, thereby improving the rate matching degree or the correctness of rate matching, and further improving the accuracy and processing efficiency of data demodulation.

In practical applications, before executing the operation 201, the first communication device may configure PDSCH resources and configure resources occupied by various signals on the PDSCH in the following manner.

In a case where the first communication device and the second communication device work in a cooperative sensing mode (also called a collaborative sensing mode), and the second communication device is a terminal, the first communication device may be configured to obtain a Channel Quality Indicator (CQI) measured by the second communication device and sensing requirements of the second communication device; configure PDSCH resources and resources occupied by various signals on the PDSCH according to the CQI and the sensing requirements of the second communication device, for example, configuring resources occupied by data signals, communication reference signals, and sensing reference signals respectively. The PDSCH resources include at least one of time-domain resources, frequency-domain resources, and spatial beams of the PDSCH.

In a case where the first communication device and the second communication device work in a cooperative sensing mode (the first communication device and the second communication device perform cooperative sensing), and the second communication device is a base station, the first communication device may be configured to obtain CQI and sensing capability information of the second communication device, and configure PDSCH resources and resources occupied by various signals on the PDSCH according to the sensing capability information of the second communication device, for example, configuring resources occupied by data signals, communication reference signals, and sensing reference signals respectively. The manner in which the first communication device obtains the CQI may be measured by a terminal accessing the first communication device, or measured by the second communication device, or measured by the first communication device itself, which is not limited in the embodiments of the present disclosure.

In a case where the first communication device works in a monostatic sensing mode, the first communication device may be configured to obtain CQI and the sensing capability information of the first communication device, and configure PDSCH resources and resources occupied by various signals on the PDSCH according to the CQI and the sensing capability information, for example, configuring resources occupied by data signals, communication reference signals, and sensing reference signals respectively. The CQI may be obtained by measurement by the first communication device or by a terminal accessing the first communication device.

In some embodiments, a configuration method for resources occupied by signals is as follows.
1. First, configure the time-domain resource type, starting symbol position S value, and symbol length L value of the entire PDSCH; configure the starting position of RBs and the number of consecutive RBs under the corresponding time-domain resource type; configure beam resources, including the direction, shape, etc. of spatial beams.
2. Second, configure the starting position, comb type, symbol period, etc. of REs occupied by communication reference signals, where the comb type includes time-domain and/or frequency-domain comb types, the time-domain comb type may be understood as time-domain density, and the frequency-domain comb type may be understood as frequency-domain density.
3. Then, configure the starting position, comb type, symbol period, etc. of REs occupied by sensing reference signals.
4. Finally, allocate the remaining resources of the PDSCH to data signals.

To facilitate the second communication device in avoiding the first resources or using the sensing signal carried on the first resources, in some embodiments, the first information includes at least one of the following:
a first identifier, configured to indicate whether to avoid the first resources or to indicate whether to use the sensing signal carried on the first resources;
a first number, representing a number of REs occupied by the first resources; or
a second identifier, representing an identifier or index of a sensing signal pattern configured by the first communication device.

The first identifier may enable the second communication device to know whether it is necessary to exclude the first resources or the sensing signal, the first number may help the second communication device perform rate matching, and the second identifier may indicate which sensing signal pattern the first communication device configures on the PDSCH. The sensing signal pattern refers to a pattern of the sensing signal, configured to indicate which REs carry the sensing signal, such that the second communication device can determine the time-frequency positions of the sensing signal.

In a case where the first communication device indicates a specific pattern of the sensing signal to the second communication device, the first information may at least include the first identifier, and may include the first number. The first identifier may be represented by Sensing Exclusion Indicator, with a value type of BITSTRING and a value range of {YES=1, NO=0}. That is, when it is necessary to avoid the first resources or it is not necessary to use the sensing signal carried on the first resources, the value of Sensing Exclusion Indicator is 1; when it is not necessary to avoid the first resources or it is necessary to use the sensing signal carried on the first resources, the value of Sensing Exclusion Indicator is 0. The first number may be understood as the number of REs occupied by the sensing signal; the first number may be represented by Sensing RE Number, with a value type of INTEGER and a value range of {0,1,...,156}.

In a case where the first communication device indicates all possible patterns of the sensing signal to the second communication device, the first information may at least include the first identifier and the second identifier, and may include the first number. The second identifier may be represented by Sensing Pattern ID, with a value type of ENUMERATED, and the value of the second identifier may be {pattern 1, ..., pattern N}.

The first communication device may further indicate the positions of REs occupied by the sensing signal to the second communication device, such that the second communication device can accurately avoid the REs occupied by the sensing signal. Based on this, in some embodiments, the method further includes:
sending second information to the second communication device;
where the second information is configured to indicate the position of the first resources, and the first resources are at an RE granularity.

In a case where the second communication device is a terminal, the second information may be carried in Radio Resource Control (RRC) signaling, for example, carried in a predetermined Information Element (IE) in the RRC signaling, and the predetermined IE may be PDSCH-Config. In a case where the second communication device is a base station, the second information may be carried in Xn interface signaling, for example, carried in a predetermined IE in the Xn interface signaling, and the predetermined IE may be RESOURCE STATUS RESPONSE.

To facilitate the second communication device in knowing the REs occupied by the sensing signal, in some embodiments, the second information includes at least one of the following:
a third identifier, configured to indicate a sensing mode as monostatic sensing or cooperative sensing;
N pieces of third information; or
N second identifiers;
where each second identifier corresponds to a corresponding piece of third information; the third information represents position information of the first resources; the second identifier represents an identifier or index of a sensing signal pattern configured by the first communication device; N is a positive integer.

The second information may include at least one of the third identifier, the N pieces of third information, and the N second identifiers. The third identifier may be understood as an identifier of a sensing type. The third identifier may be represented by sensing-type, with a value type of ENUMERATED and a value range of {type1, type2}. type1 indicates cooperative sensing, and type2 indicates monostatic sensing.

The third information may be configured to indicate the time-domain density and frequency-domain density of the sensing signal.

To facilitate the second communication device in knowing the position of the REs occupied by the sensing signal, in some embodiments, the third information includes start position information, a time-domain density and a frequency-domain density of the sensing signal, and a second number; where the start position information is configured to indicate a position of a first RE occupied by the sensing signal; the second number represents a number of symbols occupied by the sensing signal.

The time-domain density of the sensing signal may be understood as a time-domain comb type of the sensing signal; the frequency-domain density of the sensing signal may be understood as a frequency-domain comb type of the sensing signal.

The start position information may be represented by sensing-InitialPosition, that is, the sensing-InitialPosition may be configured to give the position of the first RE occupied by the sensing signal on the PDSCH; the value type of sensing-InitialPosition may be ENUMERATED, and the value range may be {pos0, pos1, pos2, pos3}.

The frequency-domain density of the sensing signal may be represented by sensing-FrequencyDensity, with a value type of INTEGER and a value range of {0, ..., 11}. The time-domain density of the sensing signal may be represented by sensing-TimeDensity, with a value type of INTEGER and a value range of {0, ..., 13}.

The second number may be represented by sensing-MaxLength, with a value type of INTEGER and a value range of {1, ..., 13}.

It should be noted that, in a case where the first communication device is in a monostatic sensing mode, after the first communication device sends the PDSCH, the first communication device may further receive an echo signal and perform sensing measurement and estimation based on the echo signal; where the echo signal is obtained by the reflection of the sensing signal carried on the PDSCH by a sensing target.

Correspondingly, some embodiments of the present disclosure further provide a resource scheduling method, applied to a second communication device. The second communication device may be a terminal or a base station, and the base station may be understood as a network device. As shown in FIG. 3, the method includes operations at blocks illustrated herein.

At block 301: Receiving first information sent by a first communication device.

The first information is configured to indicate whether to avoid first resources or to indicate whether to use a sensing signal carried on the first resources; where the first resources represent resources occupied by a sensing signal configured by the first communication device.

The first information sent by the first communication device is received in a case where the second communication device establishes a communication connection with the first communication device.

To facilitate the second communication device in avoiding the first resources or using the sensing signal carried on the first resources, in some embodiments, the first information includes at least one of the following:
a first identifier, configured to indicate whether to avoid the first resources or to indicate whether to use the sensing signal carried on the first resources;
a first number, representing a number of REs occupied by the first resources; or
a second identifier, representing an identifier or index of a sensing signal pattern configured by the first communication device.

To enable the second communication device to successfully perform sensing measurement and estimation, or to improve the accuracy and processing efficiency of data demodulation of the second communication device, in some embodiments, in a case where the first communication device and the second communication device perform cooperative sensing, the first information is configured to indicate using the sensing signal carried on the first resources; or
in a case where the first communication device and/or the second communication device is in a monostatic sensing mode, or the second communication device does not have sensing capability or has no sensing requirement, the first information is configured to indicate avoiding or not using the first resources, or to indicate not using the sensing signal carried on the first resources.

The first communication device may further indicate the positions of REs occupied by the sensing signal to the second communication device, such that the second communication device can accurately avoid the REs occupied by the sensing signal. Based on this, in some embodiments, the method further includes:
receiving second information sent by the first communication device;
where the second information is configured to indicate the position of the first resources, and the first resources are at an RE granularity.

To facilitate the second communication device in knowing the REs occupied by the sensing signal, in some embodiments, the second information includes at least one of the following:
a third identifier, configured to indicate a sensing mode as monostatic sensing or cooperative sensing;
N pieces of third information; or
N second identifiers;
where each second identifier corresponds to a corresponding piece of third information; the third information represents position information of the first resources; the second identifier represents an identifier or index of a sensing signal pattern configured by the first communication device; N is a positive integer.

In some embodiments, the third information includes start position information, a time-domain density and a frequency-domain density of the sensing signal, and a second number; where the start position information is configured to indicate a position of a first RE occupied by the sensing signal; the second number represents a number of symbols occupied by the sensing signal.

In some embodiments, the method further includes:
determining a third number according to the first information, where the third number represents a number of REs configured for transmitting data signals.

The second communication device may be configured to receive the PDSCH sent by the first communication device, exclude the REs occupied by the sensing signal on the PDSCH according to the first information, determine the actual number of REs configured for transmitting data signals, obtain the third number, and perform rate matching and/or data demodulation according to the third number, which may improve the correctness of rate matching, and the accuracy and processing efficiency of data demodulation.

It should be noted that, in a case where the first communication device and the second communication device perform cooperative sensing, after the second communication device receives the PDSCH and the first information sent by the first communication device, the second communication device may further receive an echo signal and perform sensing measurement and estimation based on the echo signal; where the echo signal is obtained by the reflection of the sensing signal carried on the PDSCH by a sensing target.

The present disclosure will be further described in detail below in combination with application embodiments.

### Application Example 1

The application scenario applicable to Application Example 1 is: the first communication device and the second communication device perform cooperative sensing, a terminal has no sensing requirement, the first communication device sends first information and second information to the second communication device, and the second information is configured to indicate the position of the first resources in a specific pattern of the sensing signal. The position of the first resources may be understood as the positions of REs occupied by the sensing signal.

For example, the first communication device is base station A, and the second communication device includes base station B and the terminal. The resource scheduling method of Application Example 1 includes the following.

Operation 1: The base station A obtains CQI measured by the terminal accessing the base station A, and obtains sensing capability information of the base station B.

Operation 2: The base station A configures PDSCH resources and resources occupied by various signals on the PDSCH according to the CQI and the sensing capability information of the base station B, and indicates the PDSCH resources to the terminal and the base station B.

The PDSCH resources may include at least one of time-domain resources, frequency-domain resources, and spatial beams of the PDSCH. FIG. 4 shows an example of PDSCH resource configuration, specifically showing the REs occupied by reference signals, sensing signals, and data signals on the PDSCH. In FIG. 4, the PDSCH occupies 11×12=132 Res. The grids marked with D in the PDSCH represent REs occupied by DMRS. In FIG. 4, the number of REs occupied by DMRS on the PDSCH is 24. The grids marked with P represent REs occupied by PT-RS, and the number of REs occupied by PT-RS is 5. The grids marked with T represent REs occupied by TRS, and the number of REs occupied by TRS is 6. The grids marked with CSI-RS in FIG. 4 represent REs occupied by CSI-RS, and the number of REs occupied by CSI-RS is 8. The grids marked with S represent REs occupied by the sensing signals. In FIG. 4, the number of REs occupied by the sensing signals on the PDSCH is 22. The blank grids represent REs occupied by data signals.

Operation 3: The base station A sends a Physical Downlink Control Channel (PDCCH) to the terminal, and sends the PDSCH, the first information, and the second information to the terminal and the base station B; the first information is configured to indicate whether to avoid the first resources or to indicate whether to use the sensing signal carried on the first resources, and the first resources represent resources occupied by the sensing signal configured by the base station A; the second information is configured to indicate the position of the first resources, the first resources being at an RE granularity.

In some embodiments, the first information includes a first identifier, a first number, and a second identifier. The first identifier is configured to indicate whether to avoid the first resources or to indicate whether to use the sensing signal carried on the first resources; the first number represents a number of REs occupied by the first resources, i.e., the number of REs occupied by the sensing signal on the PDSCH, and the first number is 22. The second identifier represents an identifier or index of a sensing signal pattern configured by the base station A; the identifier or index of the sensing signal pattern is configured to indicate a specific pattern of the sensing signal, i.e., a specific sensing signal pattern.

In some embodiments, the second information at least includes one piece of third information; where the second information sent by the base station A to the terminal may only include the third information, and the second information sent by the base station A to the base station B may include the third information and the third identifier. The third information includes start position information, a time-domain density and a frequency-domain density of the sensing signal, and a second number; where the start position information is configured to indicate a position of a first RE occupied by the sensing signal; the second number represents a number of symbols occupied by the sensing signal.

It should be noted that, since the terminal has no sensing requirement and only has communication requirements, the first information sent by the base station A to the terminal is configured to indicate avoiding the first resources or not using the sensing signal carried on the first resources; the base station B has sensing requirements, therefore, the first information sent by the base station A to the base station B is configured to indicate using the sensing signal carried on the first resources.

The first information sent by the base station A to the terminal may be carried in DCI, and the second information sent by the base station A to the terminal may be carried in RRC signaling. For example, the base station A may add Sensing Exclusion Indicator='1', Sensing RE Number=22 in DCI format 1_0 or 1_1 or 1_2. Sensing Exclusion Indicator='1' indicates avoiding the first resources or not using the sensing signal carried on the first resources. Sensing RE Number=22 indicates that the first number is 22. The base station A may indicate the positions of REs occupied by the sensing signal in a predetermined IE in RRC signaling. The predetermined IE may be PDSCH-Config. The predetermined IE may contain the following information: sensing-type 'type1', sensing-InitialPosition (4, 1), sensing-FrequencyDensity 1, sensing-TimeDensity 8, and sensing-MaxLength 2.

sensing-type='type1' indicates that the sensing type is type1, and type1 indicates cooperative sensing. sensing-InitialPosition (4, 1) indicates that the position of the first RE occupied by the sensing signal on the PDSCH is pos0 among {pos0, pos1, pos2, pos3}. sensing-FrequencyDensity 1 indicates that the frequency-domain density of the sensing signal is one sensing signal configured per RE. sensing-TimeDensity 8 indicates that the time-domain density of the sensing signal is one sensing signal configured every 8 symbols. sensing-MaxLength 2 indicates that the number of symbols occupied by the sensing signal is 2.

Operation 4: The terminal receives the PDSCH, the PDCCH, the first information, and the second information sent by the base station A. According to the first information, the terminal determines that it needs to avoid the first resources, and the number of REs configured to carry the sensing signal that need to be avoided is 22. According to the first information and the second information, the terminal determines a third number, where the third number represents a number of REs for transmitting data signals.

The third number ${N}_{RE}^{′} = {N}_{sc}^{RB} ⋅ {N}_{symb}^{sh} - {N}_{DMRS}^{PRB} - {N}_{PT - RS}^{PRB} - {N}_{CSI - RS}^{PRB} - {N}_{TRS}^{PRB} - {N}_{sensing}^{PRB} =$ $12 \times 11 - 24 - 5 - 8 - 6 - 22 = 67$. Where, ${N}_{sc}^{RB}$ represents a number of subcarriers in a Physical Resource Block (PRB); ${N}_{symb}^{sh}$ represents a number of symbols allocated to the PDSCH in a time slot; ${N}_{DMRS}^{PRB}$ represents a number of REs occupied by DMRS on the PDSCH; ${N}_{PT - RS}^{PRB}$ represents a number of REs occupied by PT-RS on the PDSCH; ${N}_{CSI - RS}^{PRB}$ represents a number of REs occupied by CSI-RS on the PDSCH; ${N}_{TRS}^{PRB}$ represents a number of REs occupied by TRS on the PDSCH; ${N}_{sensing}^{PRB}$ represents a number of REs occupied by the sensing signal on the PDSCH.

The terminal may be configured to find the positions of REs occupied by the sensing signal indicated by the second information and the positions of REs occupied by other non-data signals, exclude the sensing signal according to the positions of REs occupied by the sensing signal, and exclude other non-data signals according to the positions of REs occupied by other non-data signals; perform rate matching and data demodulation according to the third number and the positions of REs occupied by data signals. Among them, other non-data signals refer to non-data signals other than the sensing signal, including DMRS, PT-RS, CSI-RS, and TRS. The third number is configured for rate matching, and the positions of REs occupied by data signals are configured for data demodulation.

Operation 5: The base station B receives the PDSCH, the first information, and the second information sent by the base station A; determines that the base station B needs to use the sensing signal carried on the first resources according to the first information; receives an echo signal of the sensing signal carried on the first resources of the PDSCH according to the second information, and performs sensing measurement and estimation based on the received echo signal.

### Application Example 2

The application scenario applicable to Application Example 3 is: the first communication device performs monostatic sensing, the first communication device sends first information and second information to the second communication device, and the second information is configured to indicate a position of first resources in all possible patterns of a sensing signal. The position of the first resources may be understood as positions of REs occupied by the sensing signal.

The following uses the first communication device as a base station A and the second communication device as a terminal for description. The resource scheduling method of Application Example 2 includes the following.

Operation 1: The base station A obtains CQI measured by the terminal, and obtains sensing capability information of the base station A.

Operation 2: The base station A configures PDSCH resources and resources occupied by various signals on the PDSCH according to the CQI and the sensing capability information, and indicates the PDSCH resources to the terminal.

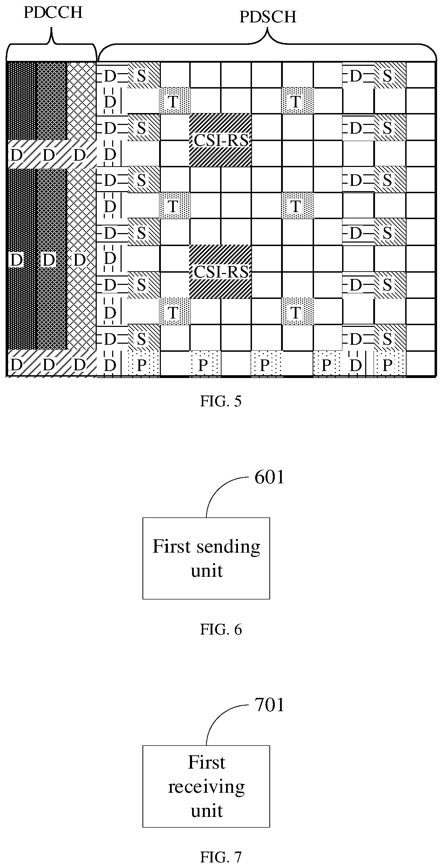

The PDSCH resources may include at least one of time-domain resources, frequency-domain resources, and spatial beams of the PDSCH. FIG. 5 shows an example of PDSCH resource configuration, specifically showing the REs occupied by reference signals, sensing signals, and data signals on the PDSCH. In FIG. 5, the PDSCH occupies 11×12=132 Res. The grids marked with D in the PDSCH represent REs occupied by DMRS. In FIG. 5, the number of REs occupied by DMRS on the PDSCH is 24. The grids marked with P represent REs occupied by PT-RS, and the number of REs occupied by PT-RS is 5. The grids marked with T represent REs occupied by TRS, and the number of REs occupied by TRS is 6. The grids marked with CSI-RS in FIG. 5 represent REs occupied by CSI-RS, and the number of REs occupied by CSI-RS is 8. The grids marked with S represent REs occupied by the sensing signals. In FIG. 5, the number of REs occupied by the sensing signals on the PDSCH is 12. The blank grids represent REs occupied by data signals.

Operation 3: The base station A sends a PDCCH, the PDSCH, the first information, and the second information to the terminal; the first information is configured to indicate whether to avoid the first resources or to indicate whether to use the sensing signal carried on the first resources, and the first resources represent resources occupied by the sensing signal configured by base station A; the second information is configured to indicate a position of the first resources, the first resources being at an RE granularity.

In some embodiments, the first information includes a first identifier, a first number, and a second identifier. The first identifier is configured to indicate whether to avoid the first resources or to indicate whether to use the sensing signal carried on the first resources; the first number represents a number of REs occupied by the first resources, i.e., the number of REs occupied by the sensing signal on the PDSCH, and the first number is 12. The second identifier represents an identifier or index of a sensing signal pattern configured by the base station A.

In some embodiments, the second information includes a third identifier, N pieces of third information, and N second identifiers; the third identifier is configured to indicate that the sensing mode is cooperative sensing; each second identifier corresponds to a corresponding piece of third information; the third information represents position information of the first resources; the second identifier represents an identifier or index of a sensing signal pattern configured by the base station A; N is a positive integer.

Since the terminal has no sensing requirement and only has communication requirements, the first information sent by the base station A to the terminal is configured to indicate avoiding the first resources or not using the sensing signal carried on the first resources. The first information may be carried in DCI, and the second information may be carried in RRC signaling.

For example, the base station A may add Sensing Exclusion Indicator='1', Sensing RE Number=12, Sensing Pattern ID='pattern2' in DCI format 1_0 or 1_1 or 1_2. Sensing RE Number=12 indicates that the first number is 12; Sensing Pattern ID='pattern2' indicates that the index or identifier of the sensing signal pattern configured by the base station A is pattern2.

The base station A may indicate all possible patterns of the sensing signal and the positions of REs occupied by the sensing signal in a predetermined IE in RRC signaling. There may be two possible patterns for the sensing signal in total, pattern1 and pattern2. pattern1 is the sensing signal pattern shown in FIG. 4, and pattern2 is the sensing signal pattern shown in FIG. 5. The predetermined IE may be PDSCH-Config. The predetermined IE may contain the following information: sensing-type 'type2', sensing-FrequencyDensity 2, and sensing-TimeDensity 6.

Here, sensing-type 'type2' indicates that the sensing type is type2, and type2 indicates monostatic sensing. sensing-FrequencyDensity 2 indicates that the frequency-domain density of the sensing signal is one sensing signal configured every 2 REs. sensing-TimeDensity 6 indicates that the time-domain density of the sensing signal is one sensing signal configured every 6 symbols.

Operation 4: The terminal receives the PDSCH, the PDCCH, the first information, and the second information sent by the base station A. According to the first information, the terminal determines that the terminal determines needs to avoid the first resources, and a number of REs configured to carry the sensing signal that need to be avoided is 12. According to the first information and the second information, the terminal determines a third number, where the third number represent a number of REs for transmitting data signals.

The third number ${N}_{RE}^{′} = {N}_{sc}^{RB} ⋅ {N}_{symb}^{sh} - {N}_{DMRS}^{PRB} - {N}_{PT - RS}^{PRB} - {N}_{CSI - RS}^{PRB} - {N}_{TRS}^{PRB} - {N}_{sensing}^{PRB} =$ $12 \times 11 - 24 - 5 - 8 - 6 - 12 = 77$. Where, ${N}_{sc}^{RB}$ represents a number of subcarriers in a Physical Resource Block (PRB); ${N}_{symb}^{sh}$ represents a number of symbols allocated to the PDSCH in a time slot; ${N}_{DMRS}^{PRB}$ represents a number of REs occupied by DMRS on the PDSCH; ${N}_{PT - RS}^{PRB}$ represents a number of REs occupied by PT-RS on the PDSCH; ${N}_{CSI - RS}^{PRB}$ represents a number of REs occupied by CSI-RS on the PDSCH; ${N}_{TRS}^{PRB}$ represents a number of REs occupied by TRS on the PDSCH; ${N}_{sensing}^{PRB}$ represents a number of REs occupied by the sensing signal on the PDSCH.

Operation 5: The base station A receives an echo signal of the sensing signal carried on the first resources of the PDSCH, and performs sensing measurement and estimation based on the received echo signal.

### Application Example 3

The application scenario applicable to Application Example 3 is: the first communication device and the second communication device perform cooperative sensing, a terminal also has sensing requirements, the first communication device sends first information and second information to the second communication device, and the second information is configured to indicate a position of first resources in a specific pattern of a sensing signal. The position of the first resources may be understood as positions of REs occupied by the sensing signal.

For example, the first communication device is a base station A, and the second communication device includes a base station B and the terminal. The resource scheduling method of Application Example 3 includes the following.

Operation 1: The base station A obtains CQI measured by the terminal accessing the base station A, and obtains sensing capability information of the base station B.

Operation 2: The base station A configures PDSCH resources and resources occupied by various signals on the PDSCH according to the CQI and the sensing capability information of the base station B, and indicates the PDSCH resources to the terminal and base station B.

The Operation 2 in Application Example 3 is the same as Operation 2 in Application Example 1, and reference may be made to the relevant description above, which will not be repeated here.

Operation 3: The base station A sends a PDCCH to the terminal, and sends the PDSCH, the first information, and the second information to the terminal and base station B; the first information is configured to indicate whether to avoid the first resources or to indicate whether to use the sensing signal carried on the first resources, and the first resources represent resources occupied by the sensing signal configured by the base station A; the second information is configured to indicate the position of the first resources, the first resources being at an RE granularity.

It should be noted that the difference between Operation 3 in Application Example 3 and Operation 3 in Application Example 1 is: the terminal also has sensing requirements, therefore, the first information sent by the base station A to the terminal is configured to indicate using the sensing signal carried on the first resources.

The first information sent by the base station A to the terminal may be carried in DCI. For example, the base station A adds Sensing Exclusion Indicator='0', Sensing RE Number=22 in DCI format 1_0 or 1_1 or 1_2. Sensing Exclusion Indicator='0' indicates using the sensing signal carried on the first resources.

Operation 4: The terminal receives the PDSCH, the PDCCH, the first information, and the second information sent by the base station A; receives an echo signal of the sensing signal carried on the first resources of the PDSCH according to the second information, and performs sensing measurement and estimation based on the received echo signal; determines a third number and positions of REs occupied by data signals according to the first information and the second information, the third number being 67; and performs rate matching and data demodulation according to the third number and the positions of REs occupied by data signals.

Operation 5: The base station B receives the PDSCH, the first information, and the second information sent by the base station A; determines that the base station B needs to use the sensing signal carried on the first resources according to the first information; receives the echo signal of the sensing signal carried on the first resources of the PDSCH according to the second information, and performs sensing measurement and estimation based on the received echo signal.

To implement the method on the first communication device side in the embodiments of the present disclosure, some embodiments of the present disclosure further provide a resource scheduling apparatus, arranged on a first communication device. As shown in FIG. 6, the apparatus includes:
a first sending unit 601, configured to send first information to a second communication device;
where the first information is configured to indicate whether to avoid first resources or to indicate whether to use a sensing signal carried on the first resources; the first resources represent resources occupied by a sensing signal configured by the first communication device.

In some embodiments, the first information includes at least one of the following:
a first identifier, configured to indicate whether to avoid the first resources or to indicate whether to use the sensing signal carried on the first resources;
a first number, representing a number of REs occupied by the first resources; or
a second identifier, representing an identifier or index of a sensing signal pattern configured by the first communication device.

In some embodiments, the apparatus further includes:
a second sending unit, configured to send second information to the second communication device;
where the second information is configured to indicate a position of the first resources, the first resources being at an RE granularity.

In some embodiments, the second information includes at least one of the following:
a third identifier, configured to indicate a sensing mode as monostatic sensing or cooperative sensing;
N pieces of third information; or
N second identifiers;
where each second identifier corresponds to a corresponding piece of third information; the third information represents position information of the first resources; the second identifier represents an identifier or index of a sensing signal pattern configured by the first communication device; N is a positive integer.

In some embodiments, the third information includes start position information, a time-domain density and a frequency-domain density of the sensing signal, and a second number; where the start position information is configured to indicate a position of a first RE occupied by the sensing signal; the second number represents a number of symbols occupied by the sensing signal.

In some embodiments, in a case where the first communication device and the second communication device perform cooperative sensing, the first information is configured to indicate using the sensing signal carried on the first resources; or
in a case where the first communication device is in a monostatic sensing mode, or the second communication device does not have sensing capability or has no sensing requirement, the first information is configured to indicate avoiding or not using the first resources, or to indicate not using the sensing signal carried on the first resources.

In practical application, the first sending unit 601 and the second sending unit may be implemented by a processor in combination with a communication interface in the resource scheduling apparatus.

To implement the method on the second communication device side in the embodiments of the present disclosure, some embodiments of the present disclosure further provide a resource scheduling apparatus, arranged on a second communication device. As shown in FIG. 7, the apparatus includes:
a first receiving unit 701, configured to receive first information sent by a first communication device;
where the first information is configured to indicate whether to avoid first resources or to indicate whether to use a sensing signal carried on the first resources; the first resources represent resources occupied by a sensing signal configured by the first communication device.

In some embodiments, the first information includes at least one of the following:
a first identifier, configured to indicate whether to avoid the first resources or to indicate whether to use the sensing signal carried on the first resources;
a first number, representing a number of REs occupied by the first resources; or
a second identifier, representing an identifier or index of a sensing signal pattern configured by the first communication device.

In some embodiments, the apparatus further includes:
a second receiving unit, configured to receive second information sent by the first communication device;
where the second information is configured to indicate a position of the first resources, the first resources being at an RE granularity.

In some embodiments, the second information includes at least one of the following:
a third identifier, configured to indicate a sensing mode as monostatic sensing or cooperative sensing;
N pieces of third information; or
N second identifiers;
where each second identifier corresponds to a corresponding piece of third information; the third information represents position information of the first resources; the second identifier represents an identifier or index of a sensing signal pattern configured by the first communication device; N is a positive integer.

In some embodiments, the third information includes start position information, a time-domain density and a frequency-domain density of the sensing signal, and a second number; where the start position information is configured to indicate a position of a first RE occupied by the sensing signal; the second number represents a number of symbols occupied by the sensing signal.

In some embodiments, in a case where the first communication device and the second communication device perform cooperative sensing, the first information is configured to indicate using the sensing signal carried on the first resources; or
in a case where the first communication device is in a monostatic sensing mode, or the second communication device does not have sensing capability or has no sensing requirement, the first information is configured to indicate avoiding or not using the first resources, or to indicate not using the sensing signal carried on the first resources.

In some embodiments, the apparatus further includes:
a determining unit, configured to determine a third number according to the first information; where the third number represents a number of REs for transmitting data signals.

In practical application, the first receiving unit 701 and the second receiving unit may be implemented by a processor in combination with a communication interface in the resource scheduling apparatus, and the determining unit may be implemented by a processor in the resource scheduling apparatus.

It should be noted: when the resource scheduling apparatus provided in the above embodiments performs resource scheduling, the division of the above program modules is only an example. In practical applications, the above processing may be assigned to different program modules as needed, that is, the internal structure of the apparatus is divided into different program modules to complete all or part of the processing described above. In addition, the resource scheduling apparatus provided in the above embodiments and the resource scheduling method embodiments belong to the same concept. For the specific implementation process, reference may be made to the method embodiments, which will not be repeated here.

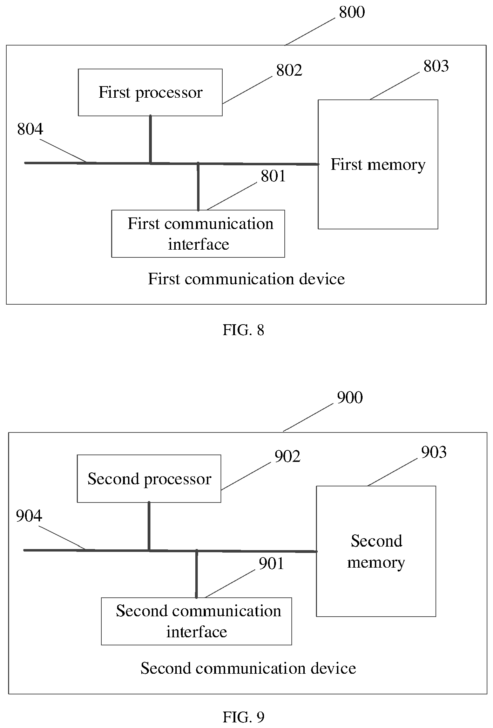

Based on the hardware implementation of the above program modules, and to implement the method on the first communication device side of the embodiments of the present disclosure, some embodiments of the present disclosure further provide a first communication device. As shown in FIG. 8, the first communication device 800 includes:
a first communication interface 801, capable of performing information interaction with other network nodes; and
a first processor 802, connected to the first communication interface 801 to perform information interaction with other network nodes, configured to execute the operations of the methods provided by one or more technical solutions on the first communication device side when running a computer program. The computer program is stored in a first memory 803.

Specifically, the first communication interface 801 is configured to send first information to a second communication device; where the first information is configured to indicate whether to avoid first resources or to indicate whether to use a sensing signal carried on the first resources; the first resources represent resources occupied by a sensing signal configured by the first communication device.

In some embodiments, the first information includes at least one of the following:
a first identifier, configured to indicate whether to avoid the first resources or to indicate whether to use the sensing signal carried on the first resources;
a first number, representing a number of REs occupied by the first resources; or
a second identifier, representing an identifier or index of a sensing signal pattern configured by the first communication device.

In some embodiments, the first communication interface 801 is further configured to send second information to the second communication device; where the second information is configured to indicate a position of the first resources, the first resources being at an RE granularity.

In some embodiments, the second information includes at least one of the following:
a third identifier, configured to indicate a sensing mode as monostatic sensing or cooperative sensing;
N pieces of third information; or
N second identifiers;
where each second identifier corresponds to a corresponding piece of third information; the third information represents position information of the first resources; the second identifier represents an identifier or index of a sensing signal pattern configured by the first communication device; N is a positive integer.

In some embodiments, the third information includes start position information, a time-domain density and a frequency-domain density of the sensing signal, and a second number; where the start position information is configured to indicate a position of a first RE occupied by the sensing signal; the second number represents a number of symbols occupied by the sensing signal.

In some embodiments, in a case where the first communication device and the second communication device perform cooperative sensing, the first information is configured to indicate using the sensing signal carried on the first resources; or
in a case where the first communication device is in a monostatic sensing mode, or the second communication device does not have sensing capability or has no sensing requirement, the first information is configured to indicate avoiding or not using the first resources, or to indicate not using the sensing signal carried on the first resources.

It should be noted: the specific processing process of the first processor 802 and the first communication interface 801 may be understood with reference to the above method embodiments.

Of course, in practical application, various components in the first communication device 800 may be coupled together through a bus system 804. It may be understood that the bus system 804 is configured to implement connection communication between these components. The bus system 804 includes, in addition to a data bus, a power bus, a control bus, and a status signal bus. However, for clarity, various buses are labeled as bus system 804 in FIG. 8.

The first memory 803 in the embodiments of the present disclosure is configured to store various types of data to support the operations of the first communication device 800. Examples of such data include: any computer program operating on the first communication device 800.

The method disclosed in the embodiments of the present disclosure may be applied to the first processor 802 or implemented by the first processor 802. The first processor 802 may be an integrated circuit chip with signal processing capability. In the implementation process, each operation of the above method may be completed by hardware integrated logic circuits in the first processor 802 or instructions in the form of software. The above first processor 802 may be a general-purpose processor, a Digital Signal Processor (DSP), or other programmable logic devices, discrete gates or transistor logic devices, discrete hardware components, etc. The first processor 802 can implement or execute the methods, operations, and logic block diagrams disclosed in the embodiments of the present disclosure. The general-purpose processor may be a microprocessor or any conventional processor. The operations of the methods disclosed in the embodiments of the present disclosure may be directly embodied as being executed and completed by a hardware decoding processor, or executed and completed by a combination of hardware and software modules in the decoding processor. The software module may be located in a storage medium, which is located in the first memory 803. The first processor 802 reads information in the first memory 803 and completes the operations of the aforementioned methods in combination with its hardware.

In some embodiments, the first communication device 800 may be implemented by one or more Application Specific Integrated Circuits (ASICs), DSPs, Programmable Logic Devices (PLDs), Complex Programmable Logic Devices (CPLDs), Field-Programmable Gate Arrays (FPGAs), general-purpose processors, controllers, Micro Controller Units (MCUs), microprocessors, or other electronic components for executing the aforementioned method.

Based on the hardware implementation of the above program modules, and to implement the method on the second communication device side of the embodiments of the present disclosure, some embodiments of the present disclosure further provide a second communication device. As shown in [FIG. 9, the second communication device 900 includes:
a second communication interface 901, capable of performing information interaction with other network nodes; and
a second processor 902, connected to the second communication interface 901 to perform information interaction with other network nodes, configured to execute the operations of the methods provided by one or more technical solutions on the second communication device side when running a computer program. The computer program is stored in a second memory 903.

Specifically, the second communication interface 901 is configured to receive first information sent by a first communication device; where the first information is configured to indicate whether to avoid first resources or to indicate whether to use a sensing signal carried on the first resources, and the first resources represent resources occupied by a sensing signal configured by the first communication device.

In some embodiments, the first information includes at least one of the following:
a first identifier, configured to indicate whether to avoid the first resources or to indicate whether to use the sensing signal carried on the first resources;
a first number, representing a number of REs occupied by the first resources; or
a second identifier, representing an identifier or index of a sensing signal pattern configured by the first communication device.

In some embodiments, the second communication interface 901 is further configured to receive second information sent by the first communication device; where the second information is configured to indicate a position of the first resources, the first resources being at an RE granularity.

In some embodiments, the second information includes at least one of the following:
a third identifier, configured to indicate a sensing mode as monostatic sensing or cooperative sensing;
N pieces of third information; or
N second identifiers;
where each second identifier corresponds to a corresponding piece of third information; the third information represents position information of the first resources; the second identifier represents an identifier or index of a sensing signal pattern configured by the first communication device; N is a positive integer.

In some embodiments, the third information includes start position information, a time-domain density and a frequency-domain density of the sensing signal, and a second number; where the start position information is configured to indicate a position of a first RE occupied by the sensing signal; the second number represents a number of symbols occupied by the sensing signal.

In some embodiments, in a case where the first communication device and the second communication device perform cooperative sensing, the first information is configured to indicate using the sensing signal carried on the first resources; or
in a case where the first communication device is in a monostatic sensing mode, or the second communication device does not have sensing capability or has no sensing requirement, the first information is configured to indicate avoiding or not using the first resources, or to indicate not using the sensing signal carried on the first resources.

In some embodiments, the second processor 902 is configured to determine a third number according to the first information; where the third number represents a number of REs for transmitting data signals.

It should be noted: the specific processing process of the second processor 902 and the second communication interface 901 may be understood with reference to the above method.

Of course, in practical application, various components in the second communication device 900 may be coupled together through a bus system 904. It may be understood that the bus system 904 is configured to implement connection communication between these components. The bus system 904 includes, in addition to a data bus, a power bus, a control bus, and a status signal bus. However, for clarity, various buses are labeled as bus system 904 in FIG. 9.

The second memory 903 in the embodiments of the present disclosure is configured to store various types of data to support the operations of the second communication device 900. Examples of such data include: any computer program operating on the second communication device 900.

The method disclosed in the embodiments of the present disclosure may be applied to the second processor 902 or implemented by the second processor 902. The second processor 902 may be an integrated circuit chip with signal processing capability. In the implementation process, each operation of the above method can be completed by hardware integrated logic circuits in the second processor 902 or instructions in the form of software. The above second processor 902 may be a general-purpose processor, a DSP, or other programmable logic devices, discrete gates or transistor logic devices, discrete hardware components, etc. The second processor 902 can implement or execute the methods, operations, and logic block diagrams disclosed in the embodiments of the present disclosure. The general-purpose processor may be a microprocessor or any conventional processor. The operations of the methods disclosed in the embodiments of the present disclosure may be directly embodied as being executed and completed by a hardware decoding processor, or executed and completed by a combination of hardware and software modules in the decoding processor. The software module may be located in a storage medium, which is located in the second memory 903. The second processor 902 reads information in the second memory 903 and completes the operations of the aforementioned methods in combination with its hardware.

In some embodiments, the second communication device 900 may be implemented by one or more ASICs, DSPs, PLDs, CPLDs, FPGAs, general-purpose processors, controllers, MCUs, microprocessors, or other electronic components for executing the aforementioned methods.

It may be understood that the memory (the first memory 803 and the second memory 903) in the embodiments of the present disclosure may be volatile memory or non-volatile memory, or may include both volatile and non-volatile memory. The non-volatile memory may be Read Only Memory (ROM), Programmable Read-Only Memory (PROM), Erasable Programmable Read-Only Memory (EPROM), Electrically Erasable Programmable Read-Only Memory (EEPROM), ferromagnetic random-access memory (FRAM), Flash Memory, magnetic surface memory, optical disk, or Compact Disc Read-Only Memory (CD-ROM); the magnetic surface memory may be a disk memory or a tape memory. The volatile memory may be Random Access Memory (RAM), which is configured as an external high-speed cache. By way of example but not limitation, many forms of RAM are available, such as Static Random Access Memory (SRAM), Synchronous Static Random Access Memory (SSRAM), Dynamic Random Access Memory (DRAM), Synchronous Dynamic Random Access Memory (SDRAM), Double Data Rate Synchronous Dynamic Random Access Memory (DDRSDRAM), Enhanced Synchronous Dynamic Random Access Memory (ESDRAM), SyncLink Dynamic Random Access Memory (SLDRAM), and Direct Rambus Random Access Memory (DRRAM). The memory described in the embodiments of the present disclosure is intended to include, but is not limited to, these and any other suitable types of memory.

In some embodiments, the present disclosure further provides a storage medium, namely a computer storage medium, specifically a computer-readable storage medium, for example, including the first memory 803 storing a computer program. The computer program can be executed by the first processor 802 of the first communication device 800 to complete the operations of the methods on the first communication device side described above. For another example, including the second memory 903 storing a computer program, the computer program can be executed by the second processor 902 of the second communication device 900 to complete the operations of the methods on the second communication device side described above. The computer-readable storage medium may be FRAM, ROM, PROM, EPROM, EEPROM, Flash Memory, magnetic surface memory, optical disk, or CD-ROM, etc.

It should be noted: "first", "second", etc. are intended to distinguish similar objects, and are not necessarily to describe a specific order or sequence.

In addition, the technical solutions recorded in the embodiments of the present disclosure may be combined arbitrarily without conflict.

The above descriptions are only some embodiments of the present disclosure and are not intended to limit the scope of the present disclosure.

## Claims

1. A resource scheduling method, applied to a first communication device, comprising:
sending first information to a second communication device;
wherein the first information is configured to indicate whether to avoid first resources, or to indicate whether to use a sensing signal carried on the first resources; the first resources represent resources occupied by a sensing signal configured by the first communication device.

2. The method according to claim 1, where the first information comprises at least one of the following:
a first identifier, configured to indicate whether to avoid the first resources or to indicate whether to use the sensing signal carried on the first resources;
a first number, representing a number of resource elements (REs) occupied by the first resources; or
a second identifier, representing an identifier or index of a sensing signal pattern configured by the first communication device.

3. The method according to claim 1, further comprising:
sending second information to the second communication device;
wherein the second information is configured to indicate a position of the first resources, and the first resources are at an RE granularity.

4. The method according to claim 3, wherein the second information comprises at least one of the following:
a third identifier, configured to indicate a sensing mode as monostatic sensing or cooperative sensing;
N pieces of third information; or
N second identifiers;
wherein each second identifier corresponds to a corresponding piece of third information; the third information represents position information of the first resources; the second identifier represents an identifier or index of a sensing signal pattern configured by the first communication device; N is a positive integer.

5. The method according to claim 4, wherein the third information comprises start position information, a time-domain density and a frequency-domain density of the sensing signal, and a second number;
wherein the start position information is configured to indicate a position of a first resource element (RE) occupied by the sensing signal;
the second number represents a number of symbols occupied by the sensing signal.

6. The method according to any one of claims 1 to 5, wherein,
in a case where the first communication device and the second communication device perform cooperative sensing, the first information is configured to indicate using the sensing signal carried on the first resources; or
in a case where the first communication device and/or the second communication device is in a monostatic sensing mode, or the second communication device does not have sensing capability or has no sensing requirement, the first information is configured to indicate avoiding or not using the first resources, or to indicate not using the sensing signal carried on the first resources.

7. A resource scheduling method, applied to a second communication device, comprising:
receiving first information sent by a first communication device;
wherein the first information is configured to indicate whether to avoid first resources, or to indicate whether to use a sensing signal carried on the first resources, and the first resources represent resources occupied by a sensing signal configured by the first communication device.

8. The method according to claim 7, wherein the first information comprises at least one of the following:
a first identifier, configured to indicate whether to avoid the first resources or to indicate whether to use the sensing signal carried on the first resources;
a first number, representing a number of resource elements (REs) occupied by the first resources; or
a second identifier, representing an identifier or index of a sensing signal pattern configured by the first communication device.

9. The method according to claim 7, further comprising:
receiving second information sent by the first communication device;
wherein the second information is configured to indicate a position of the first resources, and the first resources are at an RE granularity.

10. The method according to claim 9, wherein the second information comprises at least one of the following:
a third identifier, configured to indicate a sensing mode as monostatic sensing or cooperative sensing;
N pieces of third information; or
N second identifiers;
wherein each second identifier corresponds to a corresponding piece of third information; the third information represents position information of the first resources; the second identifier represents an identifier or index of a sensing signal pattern configured by the first communication device; N is a positive integer.

11. The method according to claim 10, wherein the third information comprises start position information, a time-domain density and a frequency-domain density of the sensing signal, and a second number;
wherein the start position information is configured to indicate a position of a first resource element (RE) occupied by the sensing signal;
the second number represents a number of symbols occupied by the sensing signal.

12. The method according to any one of claims 7 to 11, wherein,
in a case where the first communication device and the second communication device perform cooperative sensing, the first information is configured to indicate using the sensing signal carried on the first resources; or
in a case where the first communication device and/or the second communication device is in a monostatic sensing mode, or the second communication device does not have sensing capability or has no sensing requirement, the first information is configured to indicate avoiding or not using the first resources, or to indicate not using the sensing signal carried on the first resources.

13. The method according to any one of claims 7 to 11, further comprising:
determining a third number according to the first information; wherein the third number represents a number of resource elements (REs) for transmitting data signals.

14. A resource scheduling apparatus, comprising:
a first sending unit, configured to send first information to a second communication device;
wherein the first information is configured to indicate whether to avoid first resources, or to indicate whether to use a sensing signal carried on the first resources; the first resources represent resources occupied by a sensing signal configured by the first communication device.

15. A resource scheduling apparatus, comprising:
a first receiving unit, configured to receive first information sent by a first communication device;
wherein the first information is configured to indicate whether to avoid first resources, or to indicate whether to use a sensing signal carried on the first resources; the first resources represent resources occupied by a sensing signal configured by the first communication device.

16. A first communication device, comprising: a first processor and a first communication interface;
wherein the first communication interface is configured to send first information to a second communication device;
wherein the first information is configured to indicate whether to avoid first resources, or to indicate whether to use a sensing signal carried on the first resources; the first resources represent resources occupied by a sensing signal configured by the first communication device.

17. A second communication device, comprising: a second processor and a second communication interface;
wherein the second communication interface is configured to receive first information sent by a first communication device;
wherein the first information is configured to indicate whether to avoid first resources, or to indicate whether to use a sensing signal carried on the first resources; the first resources represent resources occupied by a sensing signal configured by the first communication device.

18. A communication device, comprising a processor and a memory storing a computer program capable of running on the processor,
wherein the processor is configured to, when running the computer program, execute operations of the method according to any one of claims 1 to 6, or execute operations of the method according to any one of claims 7 to 13.

19. A storage medium, storing a computer program; wherein the computer program, when executed by a processor, implements operations of the method according to any one of claims 1 to 6, or implements operations of the method according to any one of claims 7 to 13.
